# EUROPEAN PATENT APPLICATION

(11) **EP 3 591 232 A1**
(43) Date of publication of application: **08.01.2020**
(21) Application number: 18760918.5
(22) Date of filing: 19.02.2018
(51) Int. Cl.: F04D 7/00, F04D 7/02, F04D 29/18, F04D 29/22, F04B 15/00, A01K 79/00, A01K 63/00

(54) **MECHANISM FOR DRIVING THE BLADES OF A CENTRIFUGAL PUMP FOR TRANSPORTING LIQUIDS AND LIVING FAUNA**

(30) Priority: 03.03.2017 MX 2017003271
(71) Applicant: Bustamante Sandoval, Francisco Javier, 83150 Hermosillo (MX); Robles Contreras, Angel Heriberto, 83180 Hermosillo (MX)
(72) Inventor: Bustamante Sandoval, Francisco Javier, 83150 Hermosillo (MX); Robles Contreras, Angel Heriberto, 83180 Hermosillo (MX)
(74) Representative: ZBM Patents - Zea, Barlocci & Markvardsen
(86) International application number: PCT/MX2018/050006
(87) International publication number: WO 2018/160053

(57) **Abstract**

The present invention consists of a blades propeller mechanism of centrifugal pump for transporting liquids and wildlife that have as novelty and inventive activity a functional technical configuration in the propeller (impeller). In general, the problem to be solved is to obtain a centrifugal pump that contains a propellant mechanism with a functional technical configuration that allows a good passage of fluids and living species without damaging them (mainly), in an efficient way, in great quantity, and that in addition it is of easy manufacture, since at the moment it is not in the state of the art, such competitive advantages. The above is specifically obtained in the innovation of the blades and the internal distant part thereof, making the latter a cylindrical piece or a highly pronounced curved extension to achieve said end, allowing a soft and soft entry of live spices that they will be transported.

## Description

### FIELD OF THE INVENTION

The present invention, as expressed in the title of this specification, belongs to the field of mechanics and / or biotechnology. Particularly to the central part of a centrifugal pump: blades propeller mechanism of centrifugal pump for transporting liquids and wildlife.

### OBJECT OF THE INVENTION

The problem to be solved is to obtain a blades propeller mechanism of centrifugal pump for transporting liquids and wildlife, which is preferably found in a centrifugal pump, with a novelty and inventive functional technical configuration that allows a good flow of fluids and live species without damaging them (mainly), efficiently, in large quantities, and also easy to manufacture, since currently they are not in the state of the art, such competitive advantages. Therefore, the object of the invention is to improve the efficiency and the functional structural design of the impeller of the centrifugal pumps, to displace fluids and solids, avoiding damage of mainly living species.

### BACKGROUND

Aquaculture is a food sector that has had an accelerated growth in recent years, and represents a large percentage of global fish products destined for food. Currently, there is a large amount of thrusters, impellers, pumps, or devices, which operate based on the same principles of water pressure and centrifugal forces to move fluids from one place to another, or simply to increase the pressure of them.

Our invention, which will be described in later pages, refers to centrifugal pumps, specifically to a new impeller (propeller) that will be used mainly for aquaculture, as a feeder or harvester, for the displacement of solids (fish, crustaceans, larva, shrimp, among other beings being alive) contained in fluids (sea, salt or fresh water) to the other side, without damaging them. Recently, attention has been paid to the extraction of live fish and shellfish without damaging them, however, there are deficiencies in the machines that currently exist, in terms of damage caused to fish and other living things during transport, in low efficiency that present those that do not harm both fish and other living aquatic beings, as well as in their complex manufacturing.

Among the patent information, we have patent 4,768,920 of the US database, entitled "Method for pumping fragile or other items in a liquid medium", reveals a pump to displace fragile items, which contain a disk impeller that has an unobstructed passage between the pump inlet and outlet. Such impeller is smooth and in the center forms a conical vortex. He well mentions that it is an invention to move fruits, vegetables, even live fish without damaging them; However, its efficiency must be very low because it lacks blades or blades that allow a greater displacement of liquids/solids.

Patent 4,940,385 of the US database, entitled "Rotary disk pump", shows a centrifugal pump characterized by having two parallel disks coaxially arranged in the pump chamber and connected to rotate around its central axis, the opposite faces of the disks being separated a predetermined distance, where at least one of the opposite faces has a plurality of raised pallets, these pallets being smaller than the separation between the disks. This patent well mentions that the efficiency of this type of pump is lower than conventional centrifugal pumps that use impellers with blades or curved pallets; however, it shows as an advantage good handling of solid materials, greater stability and less cavitation problems.

Patent 4,373,860 of the US database, entitled "Submersible hydraulic pump of axial directed inlet and tangential outlet" deals with a configuration containing a water vortex generator, which conditions the water prior to its entry into the pump. It is a very complex machine and for the movement of live fish and shellfish it would not be useful.

The publication in espacenet of CN201621093(U), describes a water impeller having pallets in the range of 2 to 10, and the center of the impeller base has a low surface compared to the one on the periphery of it, namely, the surface of the cross section of the base plate is curved or diagonal. With the modification it is mentioned that the pressure decreases, therefore lower energy consumption.

We can also observe the publication in espacenet CN102032193(A) entitled "Stamped semi-open impeller and centrifugal pump welding", which shows a design that, according to the advantages mentioned therein, improves the efficiency, resistance and stiffness of the impeller/pump.

The Japanese patent with international publication JP2015052287, raises as problem of providing a centrifugal pump capable of suppressing the generation of cavitation, and capable of improving the self-priming performance. It presents as a solution a new configuration of curved blades, which in a few words, at the extreme part (periphery of the impeller) the blades have a lowered step surface.

The Japanese patent with international publication JP2004353655, presents a new functional technical configuration of the impeller, which each pallet or blade is three-dimensional, having a smaller width on the outside compared to the part that is near the center of the impeller.

The International Patent Publication US6220819, presents a new configuration of the impeller pallets or blades which serve to decrease the turbulence of the pump, which are characterized in that the central part of the pallets are attached to the upper impeller cover and the outer part of the pallets are attached to the bottom cover. They are joined by common screwing, the pallets have holes for both ends.

In Mexico there is a patent entitled "Propellant device for movement of fish and live crustaceans" that has been granted, MX / a / 201 1/01 1368, and generally claims the following: a base, at whose center is located at least a hollow cylindrical body for assembling the device with the arrow of an engine; a cover, in whose center a cross hole is located in whose perimeter is a fence, said hole functions as an input for a stream of water that drags solid bodies; and a flat cutting blade incorporated in the upper part of the base and below the lid, arranged in a spiral, with which it forms a conduit for the movement of solid bodies without damaging them. Despite being useful in practice, such an invention is complex to manufacture, high cost, as well as turbulence in operation since it is not symmetrical; It is true that it does not harm the fish, but it is deficient since the entrance area it has is very smaller, due to the same spiral configuration. This patent is limited to certain revolutions, due to its asymmetric configuration.

As can be seen, the patents of the current state of the art have some variations that provide some function different from each other, where sometimes the changes are usually minimal, but are considered patents due to the innovative and inventive designs that try to solve different problems related to the centrifugal pumps, including the propeller (impeller); It is worth mentioning that centrifugal pumps, as well as the impellers themselves, have been and will continue to be the subject of study due to the complexity of fluid handling, as well as solids and living beings present in them. The mechanical design of centrifugal pumps is always a challenge to constantly innovate.

### DESCRIPTION

The present invention describes a blades propeller mechanism of centrifugal pump for transporting liquids and wildlife, which has a novel and inventive functional technical configuration that provides a series of advantages and benefits in relation to the state of the art. Before beginning to describe the invention in general and detail, it is clarified that the word "propellant" will be used with reference to the "impeller" which is normally contained in centrifugal pumps. So, when we see the word propellant or impeller, we refer to the same piece here and in the state of the art. Also, the same propeller has "blades", which in the state of the art are also known as "blades", "pallets", "sheets", among others, however we choose the term "blades".

Our blades propeller mechanism of centrifugal pump for the transport of liquids and living fauna, has as main application the transport of water or liquids, as well as live fauna, for example: shrimp, fish, mollusks, among others. It is for this reason that it is considered the invention of the biotechnological area, as well as the mechanical area. The design of the main part of a centrifugal pump is the propellant (or impeller, driving part of the whole body), which gives it the novelty and inventive activity, and not only theoretically, but in practice as well.

In order to understand the invention regarding the propeller mechanism of blades, the operation of centrifugal pumps that within its body, shell or snail, include the propellers, whether open, semi-open or closed, with their multiple configurations regarding the design of blades, rotating discs, or even nothing. Now, it is to be understood that the driving part of a centrifugal type pump is the propeller itself, and when it rotates it causes the liquid to also rotate and this imparts centrifugal force to water particles, causing the water to quickly move outward as rotational mechanical energy and is transmitted to the fluid towards the discharge of the impeller; Both the pressure and kinetic energy of the water rise. In the area of suction, the water is being displaced so a negative pressure is induced in the eye (center of the propeller), where said low pressure helps to suck a stream of liquids and solids (fish, crustaceans, among other living solids or inert, etc.) again in the system. As already mentioned, the propellant (impeller) is installed inside a case (snail body, harvester, or pump simply), where water with or without solids, which will move outward will be collected inside it and continue on its way in the same direction of rotation of the propeller to discharge fluids and solids. The body has an increase in surface along the direction of the flow, said increasing area aids in the water housing that has just been added and also helps reduce the velocity of the outflow.

The foregoing being the information required to understand our invention, where our centrifugal pump blades propeller mechanism for transporting liquids and wildlife, is comprised of: a front plate and a back plate; a propeller suction ring, a deflector admitter; a drive coupling; a cap for the drive coupling; at least two blades (the number is variable) where each of them has a rectangular curved configuration that extends from the outside of the impeller into the interior fixed to a circular tube; a circular tube for each of the blades containing the propeller, where each of them is coupled to the inner part of the blade throughout its length, and in turn extends to the diameter of the suction ring; the number of blades being proportional with the number of tubes.

This configuration, which will be described in detail below according to the numbering of the figures, is of great relevance since it solves very common problems in centrifugal pumps with blades propellers. The new design, accommodation and coupling between the impeller parts, with emphasis on the blades, circular tubes, deflector admitter and cap, provide a number of advantages such as: large load capacity, because there is not much contact area as soon as the propeller is entered; variable solids loading size, being able to reduce or increase the number of blades present; it does not cause damage to the living species that circulate there due to the circular, curved and inclined configurations that occur within the propeller; better load distribution of both liquids and solids (live species);
more stable centrifugal pump because the impeller is symmetrical; less damage to the internal walls of the propeller; damage located in a single piece according to the use of the machine, which functions as a "sacrificial ring", being of low cost, easy replacement and installation: drive coupling; among others that will be referenced in the detailed description of the invention (where the preferred mode is given).

### BRIEF DESCRIPTION OF THE FIGURES

Figure 1.- Isometric view of a snail type centrifugal pump. The path that follows the flow of liquids and solids is indicated. Inside is the propulsion mechanism.
Figure 2.- Exploded view of the centrifugal pump, where the blades propeller mechanism of centrifugal pump for transporting liquids and wildlife is also shown.
Figure 3.- Isometric view of the blades propeller mechanism of centrifugal pump for the transport of liquids and wildlife.
Figure 4.- Isometric view of the blades propeller mechanism of centrifugal pump for the transport of liquids and wildlife, without front plate, suction ring, or cap.
Figure 5.- Isometric view of the blades propeller mechanism of centrifugal pump for the transport of liquids and wildlife, without front plate or suction ring.
Figure 6.- Isometric view of a curved rectangular blade and a straight tube or cylinder (preferred modality of the invention). Left image: h represents the height and / or the length of the blade. Right image: shows the outside area or part (15a) and the inner part area (15b) of a curved rectangular blade.
Figure 7.- Top view of the blades propeller mechanism of centrifugal pump for the transport of liquids and wildlife, without a front plate or suction ring, with two blades and two tubes or cylinders.
Figure 8.- Top view of the blades propeller mechanism of centrifugal pump for the transport of liquids and wildlife, without front plate or suction ring, with three blades and three tubes or cylinders.
Figure 9.- Top view of the blades propeller mechanism of centrifugal pump for the transport of liquids and wildlife, without front plate or suction ring, with four blades and four tubes or cylinders.
Figure 10.- Top view of the blades propeller mechanism of centrifugal pump for the transport of liquids and wildlife, without front plate or suction ring, with five blades and five tubes or cylinders.
Figure 11.- Top view of the blades propeller mechanism of centrifugal pump for the transport of liquids and wildlife, without front plate or suction ring, with six blades and six tubes or cylinders.
Figure 12.- Exploded view of the blades propeller mechanism of centrifugal pump for transporting liquids and wildlife.
Figure 13.- Top view of a different modality of the blade-cylinder compilation.
Figure 14.- Top view of a different modality of the blade-cylinder compilation.
Figure 15.- Top view of a different modality of the blade-cylinder compilation.
Figure 16.- Top view of a different modality of the blade-cylinder compilation.
Figure 17.- Top view of a different modality of the blade-cylinder compilation.

### DETAILED DESCRIPTION / PREFERRED MODALITY

The best way to operate the blades propeller mechanism of centrifugal pump for the transport of liquids and wildlife is described below, with main utility in the harvest and collection of products from the aquaculture sector, such as shrimp, fish, crustaceans, among other beings Saltwater or fresh water, this being the main activity carried out by the invention described herein. It should be mentioned that the description, detailed description and/or preferred modality of the invention do not exclude other possible configurations or applications of the propellant described herein.

To avoid confusion with the drafting, it's described below the names of the parts of the entire blades propeller mechanism of centrifugal pump for transport of liquids and wildlife, with such numbering seen in the attached images:
1) Pump
2) Harness.
3) Top anchor.
4) Lower anchors.
5) Body, shell or snail body.
6) Inside the pump body.
7) Propulsion mechanism, propellant or impeller
8) Front suction cover.
9) Packing.
10) Suction zone.
11) Discharge zone.
12) Tube or cylinder
13) Suction ring
14) Back plate.
15) Blade
16) Front plate.
17) Deflector admitter
18) Drive coupling
19) Cap

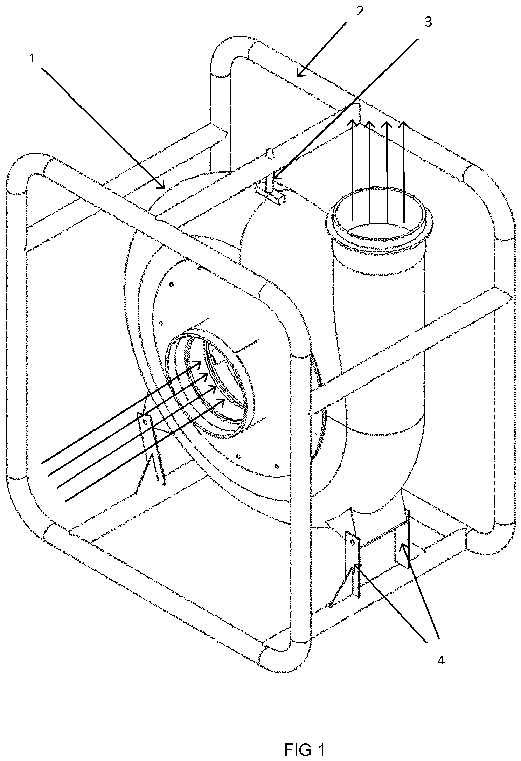

As already mentioned, our invention is currently used in aquaculture for the displacement of liquids and living solids (fish, crustaceans, shrimp, among other living things), without damaging them. According to the images, we observe Figure 1, where the centrifugal pump (1) and a series of attachments that provide stability and portability thereof, among which we find a harness (2) that covers the entire pump (1), as well as an upper anchor (3) and the lower anchors (4) on the left side and right side of the pump (1). A plurality of arrows can also be seen in the center and others in the upper right part of the pump (1) that indicate the flow path followed by liquids and solids when the pump is running. So, this is the current external form of where the blades propeller mechanism of centrifugal pump for transporting liquids and wildlife is inside. Such a form may have changes in its structure, which does not limit the main part of our invention.

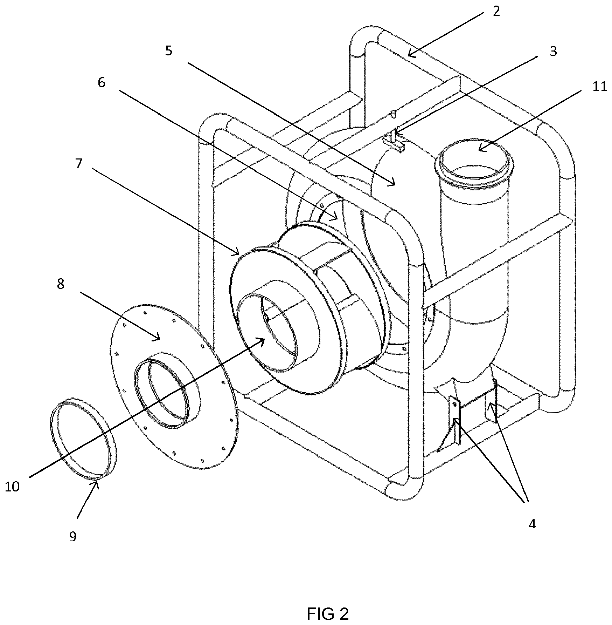

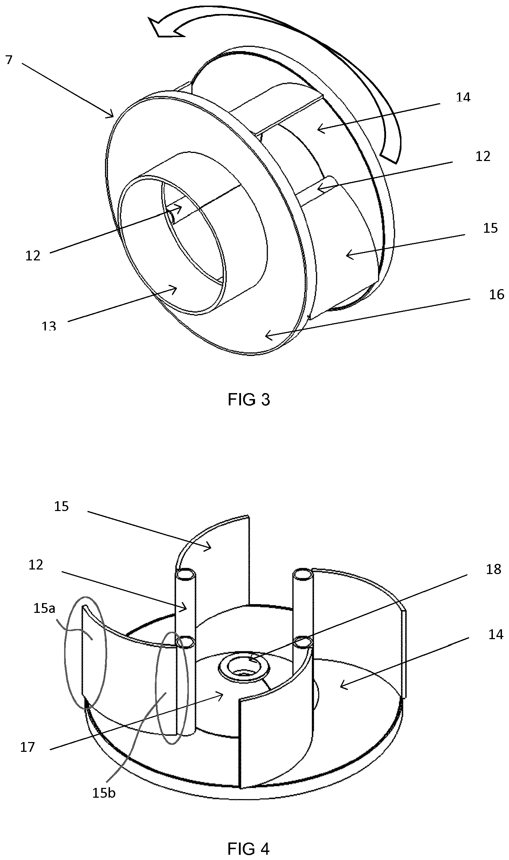

Now, in Figure 2 with exploded view of Figure 1, more components are visible and internal parts of the pump are indicated (1). We will name as a snail body (5) the structure or housing that includes most of the pieces shown, as well as in its entirety the blades propeller mechanism of centrifugal pump for transporting liquids and wildlife. The interior (6) of the body (5) of the pump is appreciated; a front suction cover (8) that serves to anchor the intake area of the product and to seal with the body (1) (having another back cover that is not seen in the images, with the same sealing function, but contains the motor mounting area) and; a gasket (9) to avoid rubbing metal-metal, so that it does not rub the suction or intake ring (13, Figure 3) with the front cover (8), the gasket (9) being made of plastic material and preventing wear of the metal parts. The suction zone (10) of the propeller shows the inlet path (6) of the pump (1) and the impeller (7), and then be ejected by the discharge zone (11).

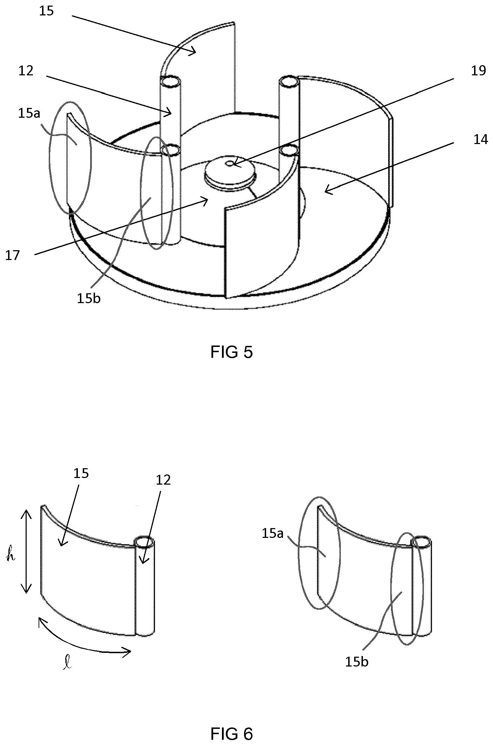

We begin now with the detailed description of our innovative and inventive centrifugal pump blades propeller mechanism for the transport of liquids and wildlife, which is visualized in a detailed and complete way from Figure 3 to Figure 17. We observe an isometric view in the Figure 3 of the propellant mechanism (7); an isometric view of the propeller mechanism (7) without front plate (16) or suction ring (13) or cap (1 9) in Figure 4; and in Figure 5 a view without front plate (16) or suction ring (13) of our propeller mechanism (7), which comprises the following: at least one front plate (16) and one back plate (14), where the front (16) contains the suction ring (13) of the propeller (7), and the back (14) has integrated the drive coupling (motor cover), and both pieces together contain the rest of the propeller parts, and both parts together contain the rest of the propeller parts, forming part of the flow channel internal; at least one suction ring (13) of the propeller (7); at least one drive coupling (18), where the drive shaft is set; at least one cap (19), the start of the intake deflector (17), where its special shape serves to cover the area of the drive shaft (coupling); at least one intake deflector (17), located at the base of the back plate (14), and has a pyramidal shape, which gives a smooth and damping path to the flow; at least two blades (15), where each one has a rectangular curved shape with a height (h) which goes from the back plate (14) to the front plate (16), and with a length (/) extending from the outside (15a) of the propeller (7) inwards (15b) and; at least two tubes or cylinders (12), one of these being for each blade (15) present, coupled along the entire height of the inner side (15b) of the blade and extending to the diameter of the suction ring (13), being proportional the number of blades (15) with the number of tubes or cylinders (12).

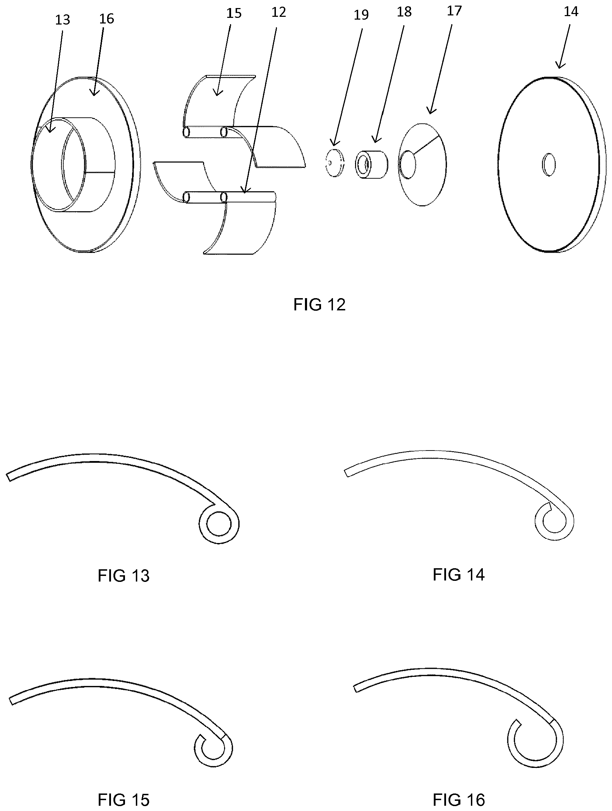

Figure 12 shows an exploded view of the blade propeller mechanism, where each of the parts thereof can be seen in detail and the location and assembly of each of them can be fully understood. To facilitate their understanding, the names are written according to figure 12 (and numbering) from left to right: suction ring (13), front plate (16), curved rectangular blade (15), tube or cylinder (12), cap (19), drive coupling (18), deflector admitter (17), and back plate (14).

All these pieces are those that are part of the blades propeller mechanism of centrifugal pump for transporting liquids and wildlife.

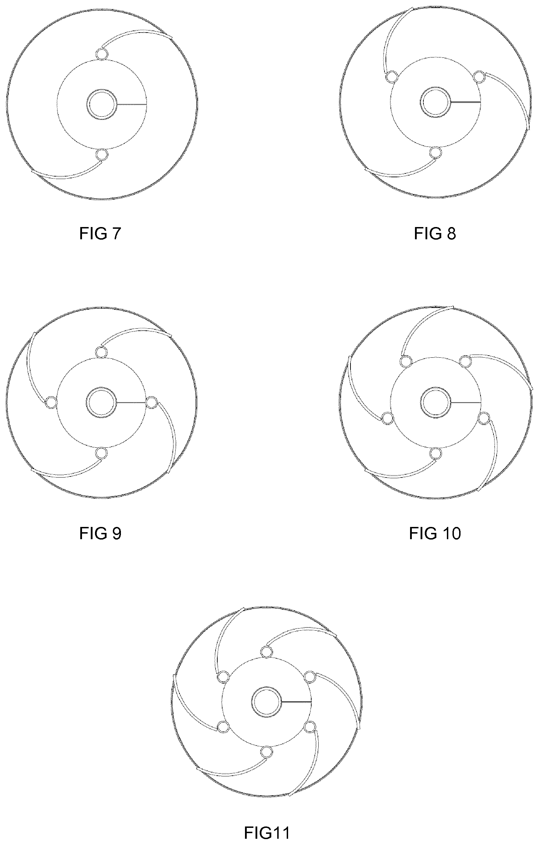

From Figure 7 to 11, with a top view of the blade propeller mechanism, it is intended to facilitate the understanding of the use of a variable number of blades (15) curved rectangular and tubes (12), where the number of tubes (12) is proportional to the number of blades (15). Figure 7 with two blades and two cylinders (12); Figure 8 with three blades and three cylinders; Figure 9 with four blades and four tubes; Figure 10 with five blades and five tubes; Figure 11 with six blades and six tubes.

As indicated a few moments ago, the curved rectangular blade (15) along with its respective tube or cylinder (12), are a fundamental part of the inventiveness and novelty of our invention. That tube or cylinder (12) is said to have a convex shape, and we refer to the curved surface of the tube or cylinder (12), which prevents damage to living species at its entrance to the propeller mechanism (7); the straight tubes or cylinders being the preferred ones, but there may also be oblique or inclined. The tubes or cylinders (12) can also be replaced by a very pronounced curve or bend extension of the inner part (15b) of the blade (15) or any other convex shape that replaces the curved surface of a tube or a cylinder (12), avoiding damage to living species at their entrance to the propellant mechanism (see Figures 13-17).

In Figures 3-12, it is appreciated the curved rectangular blades (15) with their straight tubes or cylinders (12), this mode being so far preferred because due to simple manufacturing and installation it is decided to integrate the blade (15) a straight cylinder (12).

Following the detailed description and/or preferred modality of the invention, it is understood that on the outside of the curved rectangular blade (15) a convex shape or part (12) is not required because it would be an obstacle rather than reduce the exit space of the propellant product (7), also at this point the solids or living species present are not at risk of being damaged.

Then, whether they are straight, oblique, inclined tubes or cylinders, some very pronounced curve or bend extension of the inner part of the blade as shown in Figures 13-17, or some other shape or piece that has a convex or curved design such as so far described, it is and will be part of the description and protection claimed by this specification.

According to the aforementioned characteristics, a curved rectangular blade (15) and its tube or cylinder (12) (straight, oblique cylinder, tube, some other form such as those shown in the figures, or another), is preferably equal to the rest of sets of blades (15) and cylinders (12), as shown in Figures 7-11 where the number of these varies without structural changes. In other words, the tubes or cylinders (12) of the propellant (7) are preferably equal to the rest of tubes or cylinders (12); however, they can be of variable size or shape from one blade (15) to another, or equal to a certain number of blades (15), as long as a plane of symmetry of the propeller is respected to continue to comply with the stability during rotation.

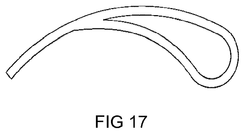

According to the above, we can exemplify with the use of two sets (X) of blade (15)-cylinder (12) (preferred modality) with two other sets (Y) of Figure 17, being alternately "(X) - (Y) - (X) - (Y) "to respect a symmetrical plane that divides the propeller (in this case 4 blades, with two different configurations) into two" (X) - (Y) // (X) - (Y) ", where each side is the mirror of the other in order to respect structural and rotational stability. With this representation it is understood the way in which the invention can be carried out in propellants with blades and variable convex pieces, both in size, shape or arrangement. Preferably for propellers of even numbers, equal to and greater than four blades, to respect the symmetry of a flat cut.

As additional features: it can be seen in the figures that none of the blade (15) is interposed to the flow of the successive nor vice versa; The tubes or cylinders (12) are part of a support that gives strength to the body of the propeller (7). ; the plates (14, 16) convert the propellant (7) into one of the closed type; the cap (19) is the start of the deflector admitter, where its special shape serves to cover the area of the drive axis (coupling), and is preferably truncated conical, being able to be flat, convex, or other, and also functions as localized wear part, facilitating replacements and reducing maintenance costs; the deflector admitter (17) serves to receive the liquids / solids and distribute them evenly inside the propeller, allowing a soft and a cushioned entry.

Finally, after having described each of the parts, functions and advantages of these, it is of utmost importance to emphasize that the use of such structural technical configurations, provide advantages far superior to the state of the art today. We can realize that the entrance of the living species is being cushioned at the entrance, in a novel way, having curved, convex, inclined surfaces throughout the central surface that prevent the damage of the species and a good distribution of them inside of the propellant or pump. Where according to size, the number of blades present would vary. It is important to remember that these propellers or pumps rotate at high revolutions, so our invention is optimal for the transport of live species, without damaging them, compared to those of the state of the art, in addition to other benefits and utilities already described.

It is to be understood that the description and modalities described herein are merely illustrative of the current preferred accomplishments of the invention, and that there are no limitations intended by the construction or design details in this document, other than as described in the claims attached. The modifications that may result after taking into account the present specification, as well as different uses that may be presented to those mentioned herein, are included.

## Claims

1. Blades propeller mechanism of centrifugal pump for the transport of liquids and wildlife that is **characterized by** being comprised of:
- At least one front plate and one rear plate, where the front one contains the suction ring of the propeller and the rear one has integrated the motor coupling (motor cover), and both pieces together contain the rest of the parts of the propeller, forming part of the internal flow channel;
- At least one suction ring of the propeller;
- At least one drive coupling, where the axis drive is fixed;
- At least one cap, being the start of the deflector admitter, where its special shape serves to cover the area of the drive axis (coupling);
- at least one deflector admitter, located at the base of the back plate, and has a pyramidal shape, which gives way to the flow;
- at least two blades, where each of them has a rectangular curved shape with a height that goes from the back plate to the front plate, and with a length that extends from the outside of the propeller inwards and;
- at least two tubes or cylinders, one of these being for each blade present, coupled along the entire height of the inner side of the blade and extending to the diameter of the suction ring, the number of blades being proportional to the number of tubes or cylinders.

2. Blades propeller mechanism of centrifugal pump for the transport of liquids and wildlife, which according to claim 1, is **characterized in that** the tubes or cylinders are preferably straight, oblique or inclined.

3. Blades propeller mechanism of centrifugal pump for transporting liquids and wildlife, according to claim 2, the tubes or cylinders can be replaced by a very pronounced curve or bend extension of the inner part of the blade or any other convex shape that replaces the curved surface of a tube or cylinder, preventing damage to living species at its entrance to the propellant mechanism.

4. Propeller mechanism of centrifugal pump blade for the transport of liquids and wildlife, according to claim 3, the tubes or cylinders of the propeller are preferably equal to the rest of tubes or cylinders; however, they can be of variable size or shape from one blade to another, or equal to a certain number of blades, as long as a plane of symmetry of the propeller is respected to continue to comply with the stability during rotation.

5. Blades propeller mechanism of centrifugal pump for transporting liquids and wildlife, which according to claim 1, is **characterized in that** the cap is preferably truncated conical, being able to be flat, convex, or other, and also functions as localized wear part, facilitating replacements and reducing maintenance costs.

6. Blades propeller mechanism of centrifugal pump for transporting liquids and wildlife, which according to claim 1, is **characterized in that** the deflector admitter serves to receive liquids/solids and distribute them evenly within the propeller, allowing a soft and cushioned entry.

7. Blades propeller mechanism of centrifugal pump for transporting liquids and wildlife, which according to claim 1 and 4, is **characterized in that** none of the blades interposes to the flow of the successive.

8. Blades propeller mechanism of centrifugal pump for the transport of liquids and wildlife, which according to claim 1, 2, 3 and 4, is **characterized in that** the tubes or cylinders are part of a support that gives strength to the body of the propeller.
